# EUROPÄISCHE PATENTSCHRIFT

(11) **EP 1 283 149 B1**
(45) Veröffentlichungstag und Bekanntmachung des Hinweises auf die Patenterteilung: **14.11.2007**
(21) Anmeldenummer: 02017675.6
(22) Anmeldetag: 07.08.2002
(51) Int. Cl.: B62D 53/08

(54) **Verfahren und Vorrichtung zur Spurstabilisierung von Gelenkfahrzeugen, insbesondere Gelenkbussen**
Method and apparatus for directionally stabilizing articulated vehicles, especially articulated busses
Procédé et appareil de stabilisation de direction de véhicules articulés, en particulier autobus articulé

(30) Priorität: 09.08.2001 DE 10139101
(43) Veröffentlichungstag der Anmeldung: 12.02.2003
(73) Patentinhaber: KNORR-BREMSE SYSTEME FÜR NUTZFAHRZEUGE GMBH, 80809 München (DE)
(72) Erfinder: Schramm, Herbert, 71229 Leonberg (DE); Horn, Matthias, 74736 Hardheim (DE); Hummel, Stefan, 70191 Stuttgart (DE); Hecker, Falk, 71706 Markgrönigen (DE); Jundt, Oliver, 74354 Besigheim (DE)
(74) Vertreter: Mattusch, Gundula

(56) Entgegenhaltungen:
- WO-A-01/02228
- DE-A- 19 964 048
- DE-A- 19 964 164
- US-A- 6 152 252

## Beschreibung

Die vorliegende Erfindung betrifft ein Verfahren und eine Vorrichtung zur Spurstabilisierung von Gelenkfahrzeugen, insbesondere Gelenkbussen gemäß den Patentansprüchen 1 und 10.

Gelenkbusse bestehen üblicherweise aus zwei Fahrzeugeinheiten, nämlich einer vorderen Fahrzeugeinheit und einem Nachläufer, die durch ein Drehgelenk und eine Faltenbalgdichtung miteinander verbunden sind. Ein Gelenkbus weist üblicherweise an der vorderen Fahrzeugeinheit eine lenkbare Vorderachse und eine Mittelachse auf, die ebenfalls lenkbar sein kann, und am Nachläufer eine Antriebsachse. Bei den meisten Gelenkbussen ist der Motor im Nachläufer angeordnet, und zwar in der Regel ganz hinten, d.h. hinter der Antriebsachse. Die vordere Fahrzeugeinheit wird also durch den Nachläufer "geschoben". Das Gewicht des Motors bewirkt eine starke Belastung der Antriebsachse und eine Entlastung der Mittelachse der vorderen Fahrzeugeinheit. Insbesondere bei einer Kurvenfahrt bzw. beim Anfahren kann das dazu führen, daß der Nachläufer die Mittelachse seitlich wegschiebt, d.h. daß der Gelenkbus einknickt.

Aus EP-A-0433891 sind Gelenkfahrzeuge mit mechanischen Einrichtungen zur Versteifung des Drehgelenks bekannt. Ein Einknicken des Gelenkfahrzeuges kann durch diese rein mechanischen Schutzeinrichtungen aber nicht zuverlässig verhindert werden. Solche "mechanischen Knickschutzvorrichtungen" basieren nämlich auf dem Prinzip eines Dämpfers und erzeugen nur dann ein hinreichend großes "Versteifungsmoment", wenn die Knickwinkelgeschwindigkeit hoch ist. Bei langsam ablaufenden Einknickvorgängen, d.h. bei geringen Knickwinkelgeschwindigkeiten, sind diese rein mechanischen Vorrichtungen aber nahezu wirkungslos und wirken nur bei höheren Fahrzeuggeschwindigkeiten, durch das geringe erzeugte Moment stabilisierend, einem "Schlingern" des Nachläufers entgegen. Um verschiedenen Fahrsituationen gerecht zu werden, kann vorgesehen sein, daß die Dämpfung solcher Knickschutzvorrichtungen automatisch verstellbar ist.
Ein weiteres Problem bei Gelenkbussen ist das Rückwärtsfahren. Durch "falsches" Lenken in Bezug auf den zwischen der vorderen Fahrzeugeinheit und dem Nachläufer aktuell vorhandenen "Knickwinkel" kann der Bus nämlich auch bei stabiler Rückwärtsfahrt einknicken. Darüber hinaus gibt es bei Gelenkbussen auch beim Anfahren Probleme, insbesondere in Kurven, aufgrund des relativ hohen Anfahrmoments und der dadurch bedingten zusätzlichen Entlastung der Mittelachse.

Aus der Veröffentlichung "Vehicle Dynamics Control with Rollover Prevention for articulated Heavy Trucks; Eisele D, Peng, H., 5th Int't Symposium on Advanced Vehicle Control, August 22-24, 2000" ist ein Verfahren zur Spurstabilisierung von Gelenkfahrzeugen bekannt, bei denen eine vordere und eine hintere Fahrzeugeinheit über ein Drehgelenk miteinander verbunden sind. Mittels Sensoren werden dort folgende das Fahrzeugverhalten charakterisierende Größen ermittelt:
Schwimmwinkel, Rollwinkel, Rollrate, Querbeschleunigung, Lenkwinkel und Gierrate. Aus diesen Größen wird ein Differenzdruck bestimmt, der den Bremsen einer Seite des Fahrzeuges zugeführt wird, um stabilisierendes Giermoment zu erzeugen.

Die EP-A-0 433 981 beschreibt ein Regelungssystem für Gelenkfahrzeuge, das ein Einknicken und ein Schwingen des Anhängers verhindern soll. Dort werden ein Lenkwinkel und mindestens die zweite zeitliche Ableitung des Lenkwinkels ermittelt und als Regelgröße verwendet.

Die DE-A-100 31 266 beschreibt ein Verfahren und eine Vorrichtung zur Erkennung einer Pendelbewegung eines Fahrzeuges, bei dem Querdynamikgröße, wie z.B. die Querbeschleunigung oder die Gierrate und ggf. weitere Größen, wie Lenkwinkel und Fahrzeuggeschwindigkeit gemessen und als Regelgröße verwendet werden.

Aufgabe der Erfindung ist es daher, ein Verfahren bzw. eine Vorrichtung zur Verringerung der Gefahr des Einknickens von Gelenkfahrzeugen anzugeben.

Das Grundprinzip der Erfindung besteht darin, in Abhängigkeit aktuell gemessener Lenkwinkel und der Fahrzeuggeschwindigkeit einen Sollwert für eine spurstabile Fahrzeugbewegung sowie einen zugeordneten Istwert zu ermitteln, der die tatsächliche Spurstabilität charakterisiert, und eine eventuell bestehende Abweichung durch einen Eingriff in das Brems- und/oder Antriebssystem des Fahrzeugs auszugleichen.

Zur Bestimmung der aktuell vorhandenen Spurstabilität werden an einzelnen Fahrzeugrädern mittels geeigneter Sensoren Lenkwinkel und Raddrehzahlen bestimmt. Ferner wird der Knickwinkel zwischen den beiden Fahrzeugeinheiten beispielsweise durch einen Drehwinkelsensor am Drehgelenk sensiert. Hierbei können Sensoren verwendet werden, die Ausgangssignale liefern, welche unmittelbar von den zu erfassenden Größen abhängen. Alternativ dazu können auch Sensoren verwendet werden, die Ausgangssignale liefern, aus denen durch weitere Verarbeitung der Signale auf die gesuchten Meßgrößen geschlossen werden kann. Beispielsweise kann der Knickwinkel aus Ausgangssignalen zweier Gierratensensoren oder Beschleunigungssensoren für verschiedene Meßrichtungen ermittelt werden, die auf den beiden Fahrzeugeinheiten angeordnet sind.

Die Ermittlung des Sollwertes für eine stabile Fahrzeugbewegung erfolgt mittels eines vorgegebenen mathematischen Fahrzeugmodells, in das als Eingangssignale ein oder mehrere Lenkwinkel und die Fahrzeuggeschwindigkeit bzw. Raddrehzahlsignale ein-gehen. Diese berechnete stabile Fahrzeugbewegung wird als Sollwert (Solltrajektorie) für eine Regelung verwendet. Um eine hinreichend genaue Beschreibung der Fahrzeugbewegung zu erhalten, können in das mathematische Modell weitere Eingangsgrößen einfließen, wie z.B. das aktuelle Antriebsmoment.

Als mögliche Ausgangsgröße bzw. -größen des Regelmodells wird der Sollknickwinkel und/oder die Sollknickwinkelgeschwindigkeit ermittelt. Weicht die tatsächliche Fahrzeugbewegung von der Solltrajektorie ab, d.h. weichen der gemessene Knickwinkel und/oder die gemessene oder berechnete Knickwinkelgeschwindigkeit von einem aktuell ermittelten Sollwert ab, so liegt eine spuruntreue Fahrzeugbewegung vor, und es erfolgt ein Regeleingriff, und zwar durch Verändern, insbesondere Reduzieren des Motordrehmoments und/oder Bremsen einzelner und bzw. mehrerer Räder. Hierdurch wird ein Drehmoment zwischen den beiden Fahrzeugeinheiten erzeugt, das die Spurtreue verbessert.

Zur Ermittlung der tatsächlichen Fahrzeugbewegung können weitere Sensoren, wie z.B. Beschleunigungssensoren für unterschiedliche Meßrichtungen und/oder Gierratensensoren, verwendet werden.

Zur Verhinderung des Einknickens beim Anfahren werden der Knickwinkel und die Radgeschwindigkeiten überwacht. Droht das Fahrzeug einzuknicken, so erfolgt eine automatische Reduzierung des Motordrehmoments und ggf. ein automatisches Auskuppeln.

Droht das Fahrzeug beim Rückwärtsfahren einzuknicken, so wird auch hier das Motordrehmoment reduziert bzw. automatisch ausgekuppelt. Insbesondere die Eingriffe beim Rückwärtsfahren können auch bei eigentlich stabiler Fahrt erfolgen, um einem Einknicken durch falsche Lenkbewegungen des Fahrers vorzubeugen.

Das erfindungsgemäße Verfahren sowie die entsprechende Vorrichtung verhindern zum einen das seitliche Weggleiten der Mittelachse und halten den Gelenkbus spurstabil. Zum anderen wird das Einknicken auch unter stabilen Fahrbedingungen verhindert.
Im folgenden wird die Erfindung anhand eines Ausführungsbeispieles im Zusammenhang mit der Zeichnung näher erläutert. Es zeigen:
- Fig. 1: einen Gelenkbus in Seitenansicht;
- Fig. 2: eine schematische Darstellung eines Gelenkbusses während einer Kurvenfahrt;
- Fig. 3: einen spurtreuen Fahrzustand; und
- Fig. 4: eine schematische Darstellung des der Erfindung zugrunde liegenden Regelkreises.

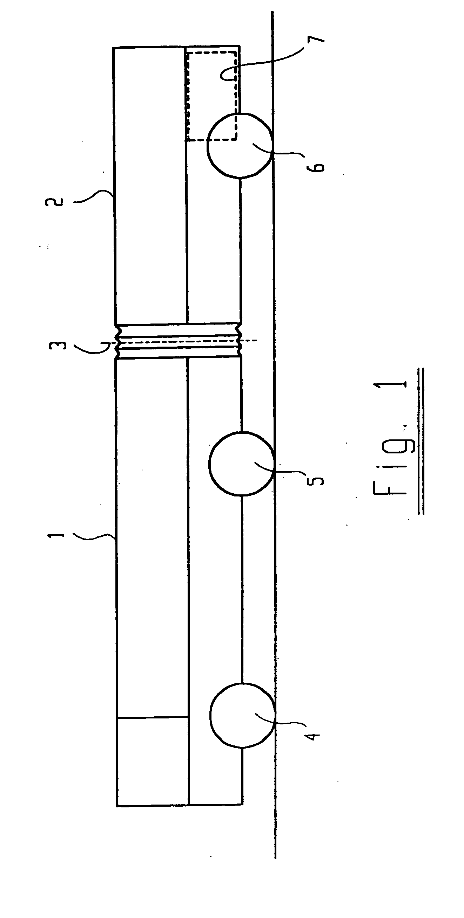

Fig. 1 zeigt einen Gelenkbus, der aus einer vorderen Fahrzeugeinheit 1 und einem Nachläufer 2 besteht, die über ein Drehgelenk miteinander verbunden sind, das hier nur schematisch durch eine Drehachse 3 angedeutet ist. Das Zugfahrzeug weist eine lenkbare Vorderachse 4 und (hier) eine lenkbare Mittelachse 5 auf. Der Nachläufer weist eine starre, d.h. nicht lenkbare Antriebsachse 6 auf, wobei im Bereich hinter der Antriebsachse 6 der Motor 7 angeordnet ist.

Aufgrund der Anordnung des Motors 7 hinter der Antriebsachse 6 ist diese relativ stark belastet. Der Nachläufer 2 schiebt die vordere Fahrzeugeinheit 1, was beim Anfahren bzw. Beschleunigen in Fahrtrichtung dazu führt, daß der Nachläufer dazu neigt, im Uhrzeigersinn um die Antriebsachse 6 zu schwenken, wodurch die Mittelachse 5 der vorderen Fahrzeugeinheit entlastet wird. Insbesondere bei Kurvenfahrten kann dies dazu führen, daß die Mittelachse zur Seite gedrückt wird und das Fahrzeug einknickt.

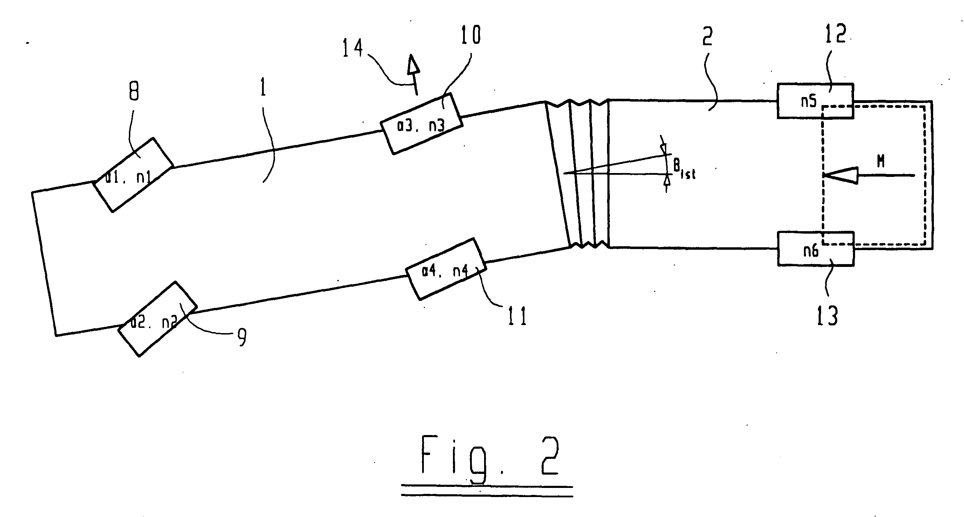

Fig. 2 zeigt eine schematische Draufsicht des Gelenkbusses bei Kurvenfahrt.

Die vordere Fahrzeugeinheit 1 weist lenkbare Vorderräder 8, °9 sowie lenkbare Mittelräder 10, 11 auf. Die Antriebsachse der hinteren Fahrzeugeinheit ist durch Antriebsräder 12, 13 gebildet, die nicht lenkbar sind.

Die Fahrzeugbewegung eines Fahrzeugs ist eine komplizierte Vektorgröße, die sich durch eine Vielzahl von Veränderlichem beschreiben läßt. Charakteristisch für die Spurstabilität eines Gelenkbusses sind insbesondere die Fahrzeuggeschwindigkeit bzw. die Raddrehzahlen ni der einzelnen Räder, die Lenkwinkel α1-α4 der lenkbaren Räder sowie der Knickwinkel β bzw. die Knickwinkelgeschwindigkeit dβ/dt. Als weitere Bewegungsgröße des Fahrzeugs ist hier schematisch das Motordrehmoment M einge-zeichnet.

Insbesondere beim Anfahren des Gelenkbusses in der hier gezeigten "Kurvenstellung" besteht Einknickgefahr, d.h. der Nachläufer 2 versucht die vordere Fahrzeugeinheit bzw. die Mittelachse der vorderen Fahrzeugeinheit in Richtung des Pfeiles 14 zur Kurvenaußenseite zu schieben.

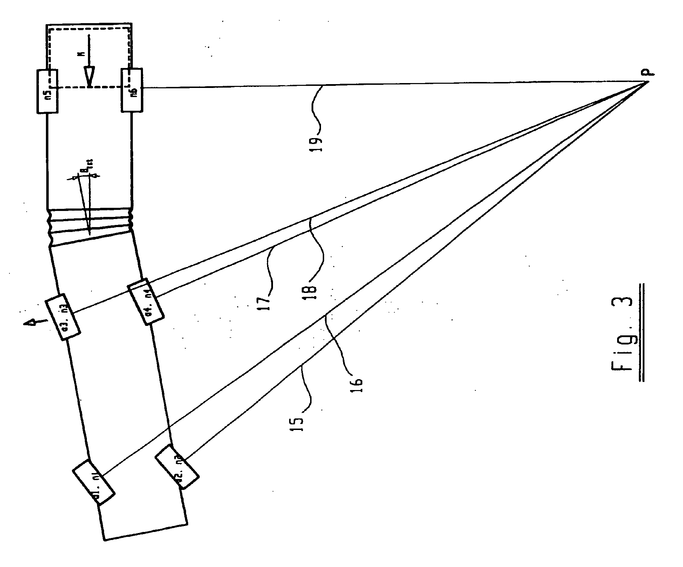

Fig. 3 zeigt den Gelenkbus der Fig. 2 bei einer spurstabilen Kurvenfahrt. Bei einer spurstabilen Kurvenfahrt kann dem Fahrzeug eindeutig ein Momentanpol P zugeordnet werden. In Abhängigkeit von einem aktuell vorhandenen Knickwinkel β sind die lenkbaren Räder so eingeschlagen, daß sämtliche Polstrahlen der Räder orthogonal zur jeweiligen Laufrichtung der Räder sind.

Insbesondere, wenn der Fahrer beim Anfahren einen in Bezug auf den aktuell vorhandenen Knickwinkel β "falschen" Lenkeinschlag vorgibt, haben die vordere und die hintere Fahrzeugeinheit keinen gemeinsamen Momentanpol. In diesem Fall entsteht ein Drehmoment, welches dazu führt, daß sich der Knickwinkel der vom Fahrer vorgegebenen Lenkstellung anzupassen versucht, was zu einem Einknicken des Gelenkbusses führen kann.

Gemäß der Erfindung wird ein Regelsystem vorgeschlagen, das solche kritischen bzw. nicht spurstabilen Fahrzustände erkennt und durch Regeleingriffe, z.B. durch Reduzierung des Motordrehmoments und/oder Bremsen einzelner Räder, stabilisiert.

Zunächst werden für die vom Fahrer vorgegebenen Lenkwinkel αi und die momentane Fahrzeug- bzw. Radgeschwindigkeit ni die spurstabile Fahrzeugbewegung (Solltrajektorie) ermittelt. Hierbei wird ein vorgegebenes Fahrzeugmodell verwendet, das die Fahrzeugphysik (Spurweite, Achsabstand, Lage des Drehgelenks, Lage des Schwerpunkts etc.) abbildet. Unter Verwendung des vorgegebenen Fahrzeugmodells und der gemessenen Lenkwinkel und der Fahrzeuggeschwindigkeit bzw. Raddrehzahlen werden ein Sollknickwinkel βSoll und/oder eine Sollknickwinkelgeschwindigkeit dβ/dt ermittelt, der bzw. die eine unter den gegebenen "Randbedingungen" spurtreue Fahrzeugbewegung charakterisieren.

Diese "Soll-Fahrzeugbewegung" wird mit der gemessenen aktuellen "Ist-Fahrzeugbewegung" verglichen. Sofern eine Abweichung besteht, erfolgt ein Regeleingriff, und zwar beispielsweise durch Veränderung, insbesondere Reduzierung des Motordrehmoments bzw. Bremsen einzelner Fahrzeugräder zur Erzeugung eines Stabilisierungsmoments.

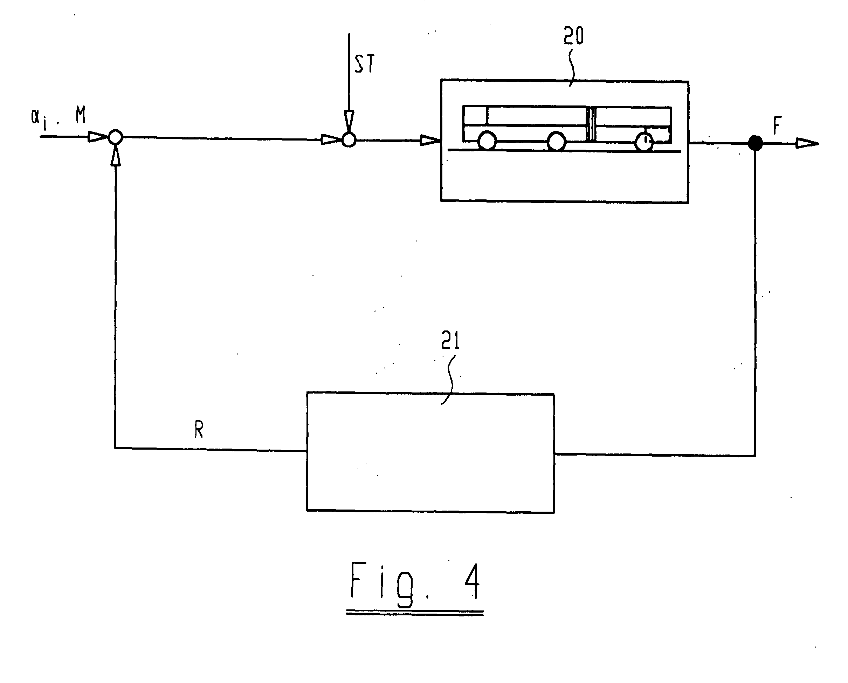

Fig. 4 zeigt schematisch das Regelungsprinzip.

Der Fahrer gibt über das Lenkrad Lenkwinkel αi und über das Gaspedal und den gewählten Gang ein bestimmtes Antriebsmoment M vor. Zusätzlich wirken auf das Fahrzeug diverse "Störgrößen" ST, wie z.B. Fahrbahnneigung, Fahrbahnunebenheit in Längsrichtung, Seitenwind etc. Der aktuelle Fahrzustand des Fahrzeugs 20 läßt sich durch einen Fahrzustandsvektor F beschreiben, der eine Vielzahl von Komponenten haben kann, insbesondere Lenkwinkel αi, Knickwinkel βi, Knickwinkelgeschwindigkeit dβ/dt, Radgeschwindigkeiten ni, Antriebsdrehmoment M, Gierrate, Achslastverteilung etc. Aus den gemessenen Lenkwinkeln αi und der Fahrzeuggeschwindigkeit bzw. den Raddrehzahlsignalen ni errechnet eine Elektronik 21 Sollwerte für eine stabile Fahrzeugbewegung, z.B. einen Sollknickwinkel βSoll bzw. eine Sollknickwinkelgeschwindigkeit dβSoll/dt. Sofern der tatsächliche Fahrzustand von diesem rechnerisch ermittelten Sollfahrzustand abweicht, erzeugt die Elektronik 21 Steuersignale R zur Veränderung des Antriebsmoments bzw. zur Bremsung einzelner Fahrzeugräder.

## Patentansprüche

1. Verfahren zur Spurstabilisierung von Gelenkfahrzeugen, bei denen eine vordere und eine hintere Fahrzeugeinheit (1, 2) über ein Drehgelenk (3) miteinander verbunden sind, mit folgenden Schritten:
a) Ermitteln des aktuellen Lenkzustandes (αi) des Fahrzeuges,
b) Ermitteln des aktuellen Bewegungszustandes (ni) des Fahrzeuges, insbesondere der Fahrzeuggeschwindigkeit,
c) Ermitteln eines eine spurtreue Fahrzeugbewegung charakterisierenden Sollwertes (βSoll, dβ/dtSoll) in Abhängigkeit und unter Verwendung eines vorgegebenen physikalischen Fahrzeugmodells, des aktuellen Lenkzustandes (αi), des Bewegungszustandes (ni), eines Knickwinkels (βSoll, βIst) und einer Knickwinkelgeschwindigkeit (dβ/dtSoll, dβ/dtIst) zwischen den beiden Fahrzeugeinheiten (1, 2), welche die Spurtreue der Fahrzeugbewegung charakterisieren,
d) Ermitteln eines die tatsächliche Spurtreue der Fahrzeugbewegung charakterisierenden Istwertes des Knickwinkels (βIst) und der Knickwinkelgeschwindigkeit (dβ/dtIst) zwischen den beiden Fahrzeugeinheiten (1, 2), welche die Spurtreue der Fahrzeugbewegung charakterisieren,
e) Ermitteln der Abweichung zwischen dem Sollwert (βSoll, dβ/dtSoll) und dem Istwert (βIst, dβ/dtIst),
f) Erzeugen eines Steuersignals in Abhängigkeit von der Abweichung, zur Ansteuerung einer oder mehrerer die Spurtreue des Fahrzeuges stabilisierenden Fahrzeugkomponenten.

2. Verfahren nach Anspruch 1, **dadurch gekennzeichnet, dass** die Beschleunigung (aquer, alängs) der Fahrzeugeinheiten in mehreren verschiedenen Meßrichtungen ermittelt wird zur Charakterisierung der tatsächlichen Spurtreue der Fahrzeugbewegung.

3. Verfahren nach einem der Ansprüche 1 oder 2, **dadurch gekennzeichnet, dass** in Schritt f) das Motordrehmoment (M) verändert wird.

4. Verfahren nach einem der Ansprüche 1 oder 2, **dadurch gekennzeichnet,dass** in Schritt f) der Motor ausgekuppelt wird.

5. Verfahren nach einem der Ansprüche 1 bis 3, **dadurch gekennzeichnet, dass** bei einem Anfahrvorgang in Schritt f) das Motordrehmoment verringert wird, wenn das Fahrzeug einzuknicken droht.

6. Verfahren nach einem der Ansprüche 1 bis 5, **dadurch gekennzeichnet, dass** in Schritt f) einzelne Räder des Fahrzeuges gebremst werden zur Erzeugung eines spurtreu stabilisierenden Drehmomentes.

7. Verfahren nach einem der Ansprüche 1 bis 6, **dadurch gekennzeichnet, dass** der Knickwinkel (βIst) unmittelbar durch einen Knickwinkelsensor gemessen wird.

8. Verfahren nach einem der Ansprüche 1 bis 6, **dadurch gekennzeichnet,dass** die Gierraten der beiden Fahrzeugeinheiten gemessen werden und aus den Gierraten der Knickwinkel (βIst) bzw. die Knickwinkelgeschwindigkeit (dβ/dtlst) ermittelt wird.

9. Verfahren nach einem der Ansprüche 1 bis 8, **dadurch gekennzeichnet, dass** der Bewegungszustand bzw. die Fahrzeuggeschwindigkeit mittels Raddrehzahlsensoren gemessen werden.

10. Vorrichtung zur Spurstabilisierung von Gelenkfahrzeugen, bei denen eine vordere und eine hintere Fahrzeugeinheit (1, 2) über ein Drehgelenk (3) miteinander verbunden sind, mit:
a) Lenkwinkelsensoren zum Bestimmen des aktuellen Lenkwinkelzustandes (αi) des Fahrzeuges,
b) Raddrehzahlsensoren zur Ermittlung des aktuellen Bewegungszustandes (ni) des Fahrzeuges,
c) einer Elektronik zur
aa) Ermittlung eines eine spurtreue Fahrzeugbewegung charakterisierenden Sollwertes (βSoll, dβ/dtSoll) in Abhängigkeit und unter Verwendung eines vorgegebenen physikalischen Fahrzeugmodells, des aktuellen Lenk-Lenkzustandes (αi), des Bewegungszustandes (ni), eines Knickwinkels (βsoll, βlst) und einer Knickwinkelgeschwindigkeit (dβ/dtSoll, dβ/dtlst) zwischen den beiden Fahrzeugeinheiten (1, 2), welche die Spurtreue der Fahrzeugbewegung charakterisieren,
bb) Ermitteln eines die tatsächliche Spurtreue der Fahrzeugbewegung charakterisierenden Istwertes des Knickwinkels (βIst) und der Knickwinkelgeschwindigkeit (dβ/dtIst) zwischen den beiden Fahrzeugeinheiten (1, 2), welche die Spurtreue der Fahrzeugbewegung charakterisieren,
cc) Ermittlung der Abweichung zwischen dem Sollwert (βSoll, dβ/dtSoll) und dem Istwert (βIst, dβ/dtlst),
dd) Erzeugung eines Steuersignals in Abhängigkeit von der Abweichung, zur Ansteuerung einer oder mehrerer die Spurtreue des Fahrzustandes stabilisierenden Fahrzeugkomponenten.

## Claims

1. Method of stabilising articulated vehicles, in particular articulated busses, in track-holding, in which front and rear vehicle units (1, 2) are connected to each other via a swivel joint (3), comprising the following steps:
(a) detection of the current steering condition (αi) of the vehicle,
(b) detection of the current condition in movement (ni) of the vehicle, in particular the vehicle speed,
(c) detection of a desired value characteristic of a directionally stable movement of the vehicle (βSoll, dβ/dtSoll) as a function of and using a predetermined physical vehicle model, the current steering condition (αi), the condition in movement (ni), a bending angle of the vehicle (βSoll, βlst) and a bending angle speed (dβ/dtSoll, dβ/dtIst) between the two vehicle units (1, 2), which are characteristic of the tracking stability of the vehicle movement,
(d) detection of the actual value of the bending angle (βlst), which characterises the tracking stability of the vehicle, and of the bending angle speed (dβ/dtlst) between the two vehicle units (1, 2), which are characteristic of the tracking stability of the vehicle movement,
(e) detection of the deviation between the desired value (βSoll, dβ/dtSoll) and the actual value (βlst, dβ/dtlst),
(f) generation of a control signal as a function of the deviation for controlling one or several vehicle components stabilising the tracking stability of the vehicle.

2. Method according to Claim 1, **characterised in that** the acceleration (aquer, alängs) of the vehicle units is established in several different measuring directions for characterising the actual tracking stability of the vehicle movement.

3. Method according to any of the Claims 1 or 2, **characterised in that** the engine torque (M) is varied in step (f)..

4. Method according to any of the Claims 1 or 2, **characterised in that** the engine is declutched..

5. Method according to any of the Claims 1 to 3, **characterised in that** in a starting operation, the engine torque is reduced in step (f) when there is the imminent risk of the vehicle bending.

6. Method according to any of the Claims 1 to 5, **characterised in that** individual wheels of the vehicle are decelerated in step (f) for generating a torque stabilising the tracking stability.

7. Method according to any of the Claims 1 to 6, **characterised in that** said bending angle (βlst) is measured directly by means of a bending-angle sensor.

8. Method according to any of the Claims 1 to 6, **characterised in that** the yawing rates of both vehicle units are measured and that the bending angle (βlst) or the bending angle speed (dβ/dtlst), respectively, is derived from the yawing rates.

9. Method according to any of the Claims 1 to 8, **characterised in that** the condition in movement or the vehicle speed, respectively, are measured by means of wheel speed sensors.

10. Apparatus for stabilising articulated vehicles, in particular articulated busses, in track-holding, in which front and rear vehicle units (1, 2) are connected to each other via a swivel joint (3), comprising:
(a) steering-angle sensors for determining the actual steering angle condition (αi) of the vehicle,
(b) wheel speed sensors for determining the actual condition in movement (ni) of the vehicle,
(c) an electronic system for
(aa) determining a desired value characteristic of a directionally stable movement of the vehicle (βSoll, dβ/dtSoll) as a function of and using a predetermined physical vehicle model, the current steering condition (αi), the condition in movement (ni), a bending angle of the vehicle (βSoll, βlst) and a bending angle speed (dβ/dtSoll, dβ/dtlst) between the two vehicle units (1, 2), which are characteristic of the tracking stability of the vehicle movement,
(bb) determining an actual value of the bending angle (βlst), which characterises the tracking stability of the vehicle, and of the bending angle speed (dβ/dtlst) between the two vehicle units (1, 2), which are characteristic of the tracking stability of the vehicle movement,
(cc) determining the deviation between the desired value (βSoll, dβ/dtSoll) and the actual value (βlst, dβ/dtlst),
(dd) generating a control signal as a function of the deviation for controlling one or several vehicle components stabilising the tracking stability of the vehicle

## Revendications

1. Procédé à stabiliser des véhicules articulés, en particulier des autobus articulés, en tenue de route, dans lequel des unités de véhicule avant et arrière (1, 2) sont raccordées l'une à l'autre via une articulation tournante (3), comprenant les étapes suivantes :
(a) détection de l'état instantané de renvoi de direction (αi) du véhicule,
(b) détection de l'état instantané du mouvement (ni) du véhicule, en particulier la vitesse du véhicule,
(c) détection d'une valeur de consigne caractéristique d'un mouvement stable en tenue de route du véhicule (βSoll, dβ/dtSoll) en fonction et par l'emploi d'un modèle physique prédéterminé du véhicule, de l'état instantané de renvoi de direction (αi), de l'état de mouvement (ni), d'un angle de pivotement du véhicule (βSoll, βlst) et d'une vitesse de l'angle de pivotement (dβ/dtSoll, dβ/dtlst) entre les deux unités du véhicule (1, 2), qui sont caractéristiques de la stabilité en tenue de route du mouvement du véhicule,
(d) détection de la valeur instantanée de l'angle de pivotement (βlst), qui caractérise la stabilité en tenue de route du véhicule, et de la vitesse de l'angle de pivotement (dβ/dtlst) entre les deux unités du véhicule (1, 2), qui sont caractéristiques de la stabilité en tenue de route du mouvement du véhicule,
(e) détection de l'écart entre la valeur de consigne (βSoll, dβ/dtSoll) et la valeur instantanée (βIst, dβ/dtIst),
(f) génération d'un signal de commande en fonction de l'écart afin de commander un ou plusieurs composants du véhicule, qui stabilisent la stabilité en tenue de route du véhicule.

2. Procédé selon la revendication 1, **caractérisé en ce que** l'accélération (aquer, alängs) des unités du véhicule est établie en plusieurs directions de mesure différentes afin de caractériser la stabilité instantanée en tenue de route du mouvement du véhicule.

3. Procédé selon une quelconque des revendications 1 ou 2, **caractérisé en ce que** le couple du moteur (M) est varié en étape (f)..

4. Procédé selon une quelconque des revendications 1 ou 2, **caractérisé en ce que** le moteur est désembrayé.

5. Procédé selon une quelconque des revendications 1 à 3, **caractérisé en ce qu'**en une opération de démarrage, le couple du moteur est réduit en étape (f), quand il y a le risque imminent d'un pivotement du véhicule.

6. Procédé selon une quelconque des revendications 1 à 5, **caractérisé en ce que** des roues individuelles du véhicule sont décélérées en étape (f) afin d'engendrer un couple, qui stabilise la stabilité en tenue de route.

7. Procédé selon une quelconque des revendications 1 à 6, **caractérisé en ce que** ledit angle de pivotement (βlst) est mesuré directement moyennant un détecteur de l'angle de pivotement.

8. Procédé selon une quelconque des revendications 1 à 6, **caractérisé en ce que** les taux de lacet des deux unités du véhicule sont mesurés, et **en ce que** l'angle de pivotement (βlst) ou respectivement la vitesse de l'angle de pivotement (dβ/dtlst) est dérivée des taux de lacet.

9. Procédé selon une quelconque des revendications 1 à 8, **caractérisé en ce que** l'état de mouvement ou respectivement la vitesse du véhicule sont mesurés moyennant des détecteurs de vitesse des roues.

10. Appareil à stabiliser des véhicules articulés, en particulier des autobus articulés, en tenue de route, dans lequel des unités de véhicule avant et arrière (1, 2) sont raccordées l'une à l'autre via une articulation tournante (3), comprenant :
(a) des détecteurs de l'angle de renvoi de direction afin de détecter l'état instantané de l'angle de renvoi de direction (αi) du véhicule,
(b) des détecteurs de vitesse des roues afin de détecter l'état instantané du mouvement (ni) du véhicule,
(c) un système électronique à
(aa) détecter une valeur de consigne caractéristique d'un mouvement stable en tenue de route du véhicule (βSoll, dβ/dtSoll) en fonction et par l'emploi d'un modèle physique prédéterminé du véhicule , de l'état instantané de renvoi de direction (αi), de l'état de mouvement (ni), d'un angle de pivotement du véhicule (βSoll, βlst) et d'une vitesse de l'angle de pivotement (dβ/dtSoll, dβ/dtlst) entre les deux unités du véhicule (1, 2), qui sont caractéristiques de la stabilité en tenue de route du mouvement du véhicule,
(bb) détecter une valeur instantanée de l'angle de pivotement (βlst), qui caractérise la stabilité en tenue de route du véhicule, et de la vitesse de l'angle de pivotement (dβ/dtlst) entre les deux unités du véhicule (1, 2), qui sont caractéristiques de la stabilité en tenue de route du mouvement du véhicule,
(cc) détecter l'écart entre la valeur de consigne (βSoll, dβ/dtSoll) et la valeur instantanée (βlst, dβ/dtlst),
(dd) engendrer un signal de commande en fonction de l'écart afin de commander un ou plusieurs composants du véhicule, qui stabilisent la stabilité en tenue de route du véhicule
